# EUROPEAN PATENT APPLICATION

(11) **EP 4 822 934 A1**
(43) Date of publication of application: **14.10.2026**
(21) Application number: 26171394.5
(22) Date of filing: 09.04.2026
(51) Int. Cl.: H02J 3/007, H02J 3/28, H02J 3/38, H02J 101/20, H02J 103/35, H02J 103/40, H02J 103/50

(54) **METHOD FOR CONTROLLING AN ENERGY SYSTEM**

(30) Priority: 10.04.2025 DE 102025114109
(71) Applicant: E.ON SE, 45131 Essen (DE); E.ON Drive GmbH, 80634 München (DE)
(72) Inventor: Lüttges, Steffen, 42549 Velbert (DE); Badarla, Naveen, 45128 Essen (DE); Vutukuri, Shashinder, 85737 Ismaning (DE); Rahi, Michael, 40625 Düsseldorf (DE); Gaytandjiev, Alexander, 50825 Köln (DE)
(74) Representative: Bals & Vogel Patentanwälte PartGmbB

(57) **Abstract**

The invention relates to a method for controlling an energy system (100), a computer program product, a computer readable storage medium, an electronic control unit (ECU) and an energy system (100).

## Description

The invention relates to a method for controlling an energy system, a computer program product, a computer readable storage medium, an electronic control unit and an energy system.

Energy systems (in particular electrical energy systems) are used to provide electrical energy to (electrical and/or energy) consumers, in particular via an electrical grid (of the energy system and/or connected to the energy system). Electrical energy can be provided, for example via an/the electrical grid, by (electrical and/or energy) providers. The providers can comprise nuclear power plants, fossil power plants (e.g. based on oil and/or gas) and/or renewable power plants (e.g. wind turbines/parks, solar/photovoltaic systems, geothermal energy plants, tidal energy plants et cetera). In the past, providers were predominantly large-scale power plants. Nowadays, an increasingly high number of smaller providers, e.g. renewable providers and/or (from) domestic households (for example photovoltaic systems) are also connected to the energy system and/or electrical grid. Due to the variance of the provided electrical energy (with respect to time) of these (renewable) energy producers, there can be a need to provide (electrical) flexibility and/or compensation, such that the energy system and/or electrical grid is stable and/or provides sufficient energy to satisfy the energy demand of all consumers, in particular during a certain time interval. These variances and/or flexibility can be (partly) compensated by the large energy companies, for example by reducing the provided energy of (flexible) providers, e.g. gas turbines. This can also be used for providing balancing energy.

However, known system have drawbacks. Due to the raising number of providers based on renewable energies and/or with high variance, the planning and/or compensation can be insufficient (or even impossible). This can reduce the (overall) efficiency, robustness and/or stability. While large power plants (e.g. commercial wind parks) can (to a certain extent) be included in balancing and/or compensating flexibility, the remaining providers (e.g. domestic providers and/or consumers) cannot be included, e.g. due to their small size and/or amount of power and/or flexibility. Also the forecast can be difficult or impossible for small sized consumers and/or providers. This can result in a reduced precision and/or ability for planning such compensation. This can reduce the stability and/or availability of electrical energy. This can also increase the costs, in particular both for energy companies and/or small providers/consumers (e.g. domestic households). Data representing the (small) providers and/or consumers, e.g. from domestic households, is missing and/or not sufficiently usable to reduce these disadvantages. For example, there is no possibility that flexibility and/or (known) forecasts (e.g. a consumer like an electrical car knows that until tomorrow morning the car should be charged from 20% to 80% of its electrical capacity) are included in (large-scale) compensation and/or flexibility planning (for example via an exchange), since e.g. there are minimum limits (for example regarding the amount of energy and/or electrical power, for example a minimum of 100kW for a time period of 15 minutes) for being included in such planning.

Consequently, it may be one objective problem of the present invention to (at least partly) overcome at least one of the aforementioned disadvantages. In particular, it can be an objective to provide improved flexibility, costs, robustness, stability, environmental sustainability, efficiency, and/or expandability.

The above problem is solved by a method with the features of the independent method claim, a computer program product with the features of the independent claim relating to a computer program product, a computer-readable storage medium with the features of the independent claim relating to a computer-readable storage medium, an electronic control unit with the features of the independent claim relating to an electronic control unit and an energy system with the features of the independent system claim. Further features and details of the invention are shown in the dependent claims, the description and the drawings. Features and details which are described in the context of the method according to the invention naturally also apply in the context of the computer-readable storage medium according to the invention and/or in the context of the electronic control unit according to the invention and/or in the context of the energy system according to the invention and vice versa, so that with respect to the disclosure, reference is or can always be made to the individual aspects of the invention. In particular, advantages described in the context of the first, second, third, fourth and/or fifth aspect can also apply (in each case) to the first, second, third, fourth and/or fifth aspect.

The above objective problem is solved according to a first aspect by a method for controlling an energy system, electrical grid (of the energy system and/or connected to the energy system), provider(s) and/or consumer(s), the energy system comprising:
- an electronic control unit, which preferably implements an aggregator and/or a virtual power plant,
wherein the method comprises:
- providing and/or receiving, by the electronic control unit, preferably the aggregator, cluster forecasts comprising planned energy provision and/or planned energy consumption of clusters of (electrical and/or energy) providers and/or (electrical and/or energy) consumers, wherein (preferably) the cluster forecasts are specific for a future time interval,
- calculating, by the electronic control unit, preferably the aggregator, a combined forecast, based on the cluster forecasts,
- providing, (in particular) by the electronic control unit, preferably the virtual power plant, a schedule which is specific for the combined forecast and (in particular) the future time interval,
- controlling, (in particular) by the electronic control unit, preferably the virtual power plant, the energy system based on the schedule.

The method according to the first aspect may (at least partially) be computer-implemented and/or performed repeatedly and/or constantly. Advantageously, at least one of the described steps may be performed in the method, wherein the steps are preferably performed sequentially in the specified order or alternatively in a different order. The individual steps may also be repeated. Preferably, the method can be carried out during and/or before an operation or use of an energy system and/or an electronic control unit. An electronic control unit can (at least partially) implement the method, for example by carrying out the (above-mentioned) steps and/or controlling and/or regulating corresponding components (e.g. of the electrical grid, clusters, consumers and/or providers).

An energy system may (at least) comprise the electronic control unit. Furthermore, the energy system may also comprise (and/or be connected to) an energy and/or electrical grid, which preferably is configured for distribution (feeding in and/or tapping of) of electrical energy. The consumers and/or providers may be (electrically) connected to the electrical grid, preferably directly connected (e.g. via wiring) and/or indirectly via additional buffer systems and/or electrical distribution (sub-)systems. The energy system may also comprise (parts of) the plurality of technical aggregators. The energy system may for example be controlled and/or owned by an energy company and/or electrical grid owner. Preferably, at least parts of or all of the plurality of technical aggregators are controlled and/or owned by one or several (other) energy companies and/or energy pools and/or providers. In other words, the plurality of technical aggregators (independent of their owner) may connect and/or be connected to the energy system and/or electronic control unit, in particular physically (e.g. via the electrical grid) and/or (preferably) via (a separate) data communication (in particular to the electronic control unit, preferably the aggregator). It is also possible, that data communication and (physical) electrical connection are combined. For example, (one or more of) the plurality of technical aggregators may comprise (or be) computer programs implemented by computers, which in particular are integrated and/or part of a (local and/or physical) electrical node of the electrical grid.

The electronic control unit may comprise a computer and/or computing system. The electronic control unit may comprise a cloud computer and/or (cloud) computing system. The electronic control unit, preferably implements an aggregator and/or a virtual power plant. The aggregator can comprise a (cloud) computer and/or computer program. The virtual power plant can comprise a (another) (cloud) computer and/or computer program. For example, the aggregator can be implemented by a first computer of a cloud computing system, in particular at a first location. For example, the virtual power plant can be implemented by a second computer of a cloud computing system, in particular at a second and/or different location. A distributed / cloud system can improve the efficiency for data communication, in particular between the plurality of technical aggregators and the aggregator (which may be located close to each other somewhere in the electrical grid). For example, an aggregator (and/or a corresponding [cloud] computer implementing the aggregator) may be located close to a (group of) technical aggregator(s) (and/or a corresponding [cloud] computer implementing the technical aggregator) in a certain area. It is also possible, that both the aggregator and the virtual power plant are implemented in a (single) computer and/or at the same location. This can facilitate data handling. This can provide a fallback option, e.g. if another computer in a cloud system is not working and/or corrupted. It is also possible, that the aggregator and/or virtual power plant are selectively run and/or implemented by the same or different computers, e.g. of a cloud computing system. This can reduce costs and/or provide additional computing power (if necessary, e.g. for calculations and/or simulations). For example, the electronic control unit and/or computer can be chosen based on an actual and/or expected/future computational effort. This can also be based on a (data) connection and/or distance (physical and/or with respect to data communication latency) to an exchange (see below). The aggregator (and/or a corresponding computer implementing it) and the virtual power plant (and/or a corresponding computer implementing it) can be connected for exchanging data, in particular via a (physical) data communication. The electronic control unit, in particular the aggregator and/or virtual power plant can be configured for distributed energy management, in particular of the energy system, electrical grid, providers and/or consumers.

In the context of the invention (if not indicated differently), energy may comprise electrical energy, in particular comprising (electrical) power (for a certain time), current and/or voltage.

In the context of the invention (if not indicated differently), a "plurality" may comprise at least one, preferably at least two or more. For example, a plurality of technical aggregators may comprise at least one or (preferably) at least two technical aggregators.

In the context of the invention (if not indicated differently), a "forecast" may be specific for a future point in time and/or for the future time interval. A forecast can be based on planning and/or prediction of future circumstances, e.g. the predicted provider production profile of a wind energy system, which may be dependent on the (maximum) capacity of the system and/or the weather, in particular the wind, in the future. Consequently, each forecast may (to a certain extent) be based on and/or comprise an uncertainty, educated guess and/or (statistical) expectation (for the future time interval).

In the context of the invention (if not indicated differently), (electrical) "flexibility" can comprise a (flexible) amount and/or variation, e.g. with respect to a planned (amount of) energy provision and/or energy consumption. For example, a provider provision profile and/or a planned energy provision (or consumption) can comprise 2 MW (constantly) for the next 24 hours or e.g. 100kW for 15 a 15 minutes time interval. A flexibility can comprise a (possible and/or tolerable) variation of 10% (e.g. 0.2 MW or 10kW in this example) and/or of a fixed amount (e.g. 0.1 MW or 5kW). Consequently, the corresponding provider, consumer and/or cluster can comprise and/or provide (such a) flexibility during that time interval.

In the context of the invention (if not indicated differently), a "profile" may comprise time-dependent data, for example in a data format and/or (1D) vector (in a simple case). For example, a provider provision profile may comprise (planned and/or future) electrical energy and/or power (values) provided by a provider as a function of (discrete) time(points). Preferably (and in the simplest case) all different profiles may be specific and/or correspond to the (same) future time interval. In other words, a synchronized planning and/or forecasting can be realized. The providers, consumers, electronic control unit, (plurality of) technical aggregators, aggregator, and/or virtual power plant may use, calculate based on and/or comprise the (same) future time interval.

The method may comprise providing and/or receiving (from the technical aggregators), by the electronic control unit, preferably the aggregator, cluster forecasts comprising planned energy provision and/or planned energy consumption of clusters of providers and/or consumers, wherein (preferably) the cluster forecasts are specific for a future time interval, in particular for a planned future time interval. The future time interval may for example comprise/cover 15 minutes. The method can be performed repeatedly, ongoing, and/or for subsequent future time intervals. For example, the future time interval may comprise a 15-minute time interval and/or correspond to a certain (future) point in time, e.g. the future time interval of 15 minutes starting at 2 pm, finishing at 2:15 pm and/or when it is 10 am now. The method may be performed repeatedly and/or ongoing and/or in/for subsequent blocks to cover the next 24 hours or 48 hours (with subsequent future time intervals) for example. The method may be performed for a plurality of future time intervals, e.g. subsequent time intervals of 15 minutes (each). It is also possible, that different providers and/or consumers and/or technical aggregators are using and/or planning based on different and/or unsynchronized (future) time intervals (e.g. cluster-specific time intervals) and/or time series. The electronic control unit, in particular the aggregator may be configured to merge, synchronize and/or combine such and/or different future time intervals and provide a combined forecast based on a (merged, synchronized, combined and/or standardized) future time interval.

Providing cluster forecasts can comprise receiving the cluster forecasts by the electronic control unit, in particular the aggregator. The cluster forecasts can be calculated and/or transmitted from/by the technical aggregators (see below). Alternatively and/or in addition, the electronic control unit, in particular the aggregator, may (at least partly) calculate cluster forecasts, for example when a cluster is directly connected to the electronic control unit, in particular the aggregator, in particular without a technical aggregator (in between). A cluster may also comprise a single consumer and/or provider. The electronic control unit, in particular the aggregator, may calculate a cluster forecast, and in particular include (this) cluster forecast in the calculation of a combined forecast (together with other potentially received cluster forecasts).

An (electrical and/or energy) provider can comprise (several) consumer asset classes and/or comprise (at least one):
- nuclear power plant,
- fossil power plant (e.g. based on oil and/or gas),
- renewable power plant, (in particular)
- (single) photovoltaic/solar cell, unit or system,
- (single) wind turbine or wind turbine system/park,
- geothermal energy plant,
- biomass plant,
- tidal energy plant, and/or
- electrical storage (e.g. an accumulator or pumped storage power station), in particular of an electric vehicle.

An (electrical and/or energy) consumer can comprise (several) consumer asset classes and/or comprise (at least one):
- heat pump,
- electric water heater,
- household appliance (e.g., refrigerator, washing machine, air conditioner)
- server farm,
- manufacturing plant,
- building,
- charging infrastructure (e.g. for electric vehicles),
- irrigation system,
- electrical storage (e.g. an accumulator or pumped storage power station), in particular of an electric vehicle.

Some consumers can (also/either) behave and/or be configured as provider and/or vice versa, e.g. an electrical storage, which can by a consumer (while being charged) or a provider (when being discharged). This may change depending on the future time interval (for example if the future time interval is during night or daytime).

Providers and/or consumers can be commercial, public and/or domestical (e.g. comprised by and/or referring to private households).

Clusters of providers and/or consumers can comprise (distributed) groups, pools and/or instances of (separate and/or single) providers and/or consumers. The providers and/or consumers of a cluster can be connected via data communication and/or electrical connections (e.g. wiring) to each other and/or to a (single) technical aggregator (of the plurality of technical aggregators) and/or the electrical grid. The clusters can e.g. be formed physically, e.g. by (electrically) connected charging stations and/or wallboxes for electric vehicles and/or photovoltaic systems, which (together) form a cluster, in particular due to local proximity, (hard/fixed) electrical wiring and/or by being controlled by a (single) computer (implementing a technical aggregator) and/or technical aggregator. Alternatively and/or in addition a cluster can also be formed virtually and/or digitally, e.g. by a technical aggregator. This could mean, that they are not (necessarily) directly (electrically) connected, but preferably are connected to (the same) electrical grid.

Clusters of providers can provide providers only. This can facilitate the cluster forecasts, in particular since only energy provision (of corresponding clusters) can be included.

Clusters of consumers can provide consumers only. This can facilitate the cluster forecasts, in particular since only energy consumption (of corresponding clusters) can be included.

Clusters of providers and consumers can comprise a mixture of and/or both providers and consumers. This can be advantageous, since within these clusters, different providers and consumers may (at least) partly provide electrical energy and/or flexibility to each other and/or improve the overall flexibility. For example, such a cluster may comprise (at least) a provider and (at least) a consumer. The provider may provide a planned energy provision of 2 MW (constantly) for the next 24 hours and a flexibility of 10% of that planned energy provision (e.g. 0.2 MW in this example). The consumer may provide a planned energy consumption of 1.5 MW (constantly) for the next 24 hours and a flexibility of 10% of that planned energy provision (e.g. 0.15 MW in this example). In combination and/or a (corresponding) cluster forecast may provide and/or comprise a cluster provision profile comprising a planned provided electrical power over time (in this case 24 hours) of 0.5 MW. A corresponding cluster flexibility profile comprising a planned electrical flexibility over time (in this case 24 hours) may comprise and/or correspond to 0.05 MW. Alternatively or in addition the cluster may also comprise (at least one) energy storage configured as and/or acting as provider and/or consumer. In other words, a provision of electrical energy and/or flexibility and/or storage can be provided to other providers and/or consumers within a cluster. Advantageously, a reduced energy consumption, provision and/or flexibility can be suitable and/or sufficient for such a cluster. With respect to the (whole) energy system and/or all clusters this can reduce the need for (additional) flexibility and/or storage and/or increase the stability.

In the above example the values are constant over time (e.g. 2 MW for the next 24 hours). However, the relation can be more complex. Preferably, the provider forecasts, consumer forecasts, cluster forecasts and/or combined forecast (and/or corresponding components) can be time-dependent and/or a (discretized) function of time. In other words, they can be represented as (discrete) time series and/or 1D-vectors (e.g. with 2400 values representing the equally distanced time points of the next 24 hours [which means 100 values for each single hour]) and/or (2D-) matrices (e.g. comprising 1D-vectors of components along different columns or lines).

Cluster forecasts comprising planned energy provision and/or planned energy consumption of clusters of providers and/or consumers can comprise forecasts which are specific for at least one, a single and/or a corresponding cluster. A cluster forecast may be provided for and/or by each cluster. A cluster forecast can comprise planned and/or future energy provision and/or planned energy consumption, in particular for a cluster-specific and/or the future time interval. Each cluster may plan and/or be planned on a (separate) cluster-specific time interval (for example by a technical aggregator). Preferably, the future time interval is included and/or covered by the cluster-specific time interval (used for planning for the cluster and/or by the [corresponding] technical aggregator). For example, a planned energy provision or planned energy consumption may comprise (providing/consuming) 2 MW for or (constantly) during the next 48 hours. This can also include a specific flexibility regarding energy consumption and/or provision. However, the cluster forecast(s) can be more detailed and/or complex (see above and/or below).

Calculating, by the electronic control unit, preferably the aggregator, a combined forecast, based on the cluster forecasts, can (in the simplest case) comprise merging and/or combining the cluster forecasts into a (single and/or summed-up) combined forecast. For example, this can comprise summing up and/or integrating the cluster forecasts and/or components of the cluster forecasts (see above and/or below). The cluster forecasts can be used as input to the electronic control unit, preferably the aggregator.

Providing, (in particular) by the electronic control unit, preferably the virtual power plant, a schedule which is specific for the combined forecast and (in particular) the future time interval, can comprise calculating a schedule. A schedule can comprise/be a data structure which comprises data and/or is specific for (each) cluster, provider and/or consumer. The schedule can be based on and/or comprise a plurality of (discrete) time points, which preferably cover (at least) the future time interval. Therefore, the schedule, in particular for the future time interval and/or for each (single) time point can comprise (at least one or more):
- (electrical and/or energy) provision profile(s),
- (electrical and/or energy) consumption profile(s),
- (electrical and/or energy) flexibility profile(s), and/or
- (electrical and/or energy) storage profile(s),
preferably (specific) for each cluster, provider and/or consumer.

In particular in the simplest case (for example if the bid has been successfully placed, realized and/or accepted by the exchange), the/this:
- provision profile(s) for each cluster/provider/consumer can be identical to the (corresponding) cluster/provider/consumer provision profile(s),
- consumption profile(s) for each cluster/provider/consumer can be identical to the (corresponding) cluster/provider/consumer consumption profile(s),
- flexibility profile(s) for each cluster/provider/consumer can be identical to the (corresponding) cluster/provider/consumer flexibility profile(s), and/or
- storage profile(s) for each cluster/provider/consumer can be identical to the (corresponding) cluster/provider/consumer storage profile(s).

In other words, the schedule can comprise data and/or information that the (energy/electrical) provision, consumption, flexibility and/or storage can be implemented as desired and/or originally planned.

In other cases (for example if the bid has not or only partly been successfully placed, realized and/or accepted by the exchange), the/this:
- provision profile(s) for each cluster/provider/consumer can be different to the (corresponding) cluster/provider/consumer provision profile(s),
- consumption profile(s) for each cluster/provider/consumer can be different to the (corresponding) cluster/provider/consumer consumption profile(s),
- flexibility profile(s) for each cluster/provider/consumer can be different to the (corresponding) cluster/provider/consumer flexibility profile(s), and/or
- storage profile(s) for each cluster/provider/consumer can be different to the (corresponding) cluster/provider/consumer storage profile(s).

In other words, the schedule can comprise data and/or information that the (energy/electrical) provision, consumption, flexibility and/or storage cannot or only partly be realized and/or be realized/implemented in a changed way (compared to the original plan). For example, the timing could be different. In addition and/or alternatively the (absolute) amount of provided and/or consumed energy/power can be different, e.g. correspond to only half of the (originally planned) provided and/or consumed energy/power. In this (simple example) the:
- provision profile(s) for each cluster/provider/consumer can be shifted (with respect to time) and/or scaled (e.g. by a factor of 0.5) based on the (corresponding) cluster/provider/consumer provision profile(s),
- consumption profile(s) for each cluster/provider/consumer can be shifted (with respect to time) and/or scaled (e.g. by a factor of 0.5) based on the (corresponding) cluster/provider/consumer consumption profile(s),
- flexibility profile(s) for each cluster/provider/consumer can be shifted (with respect to time) and/or scaled (e.g. by a factor of 0.5) based on the (corresponding) cluster/provider/consumer flexibility profile(s), and/or
- storage profile(s) for each cluster/provider/consumer can be shifted (with respect to time) and/or scaled (e.g. by a factor of 0.5) based on the (corresponding) cluster/provider/consumer storage profile(s).

Controlling, in particular by the electronic control unit and/or virtual power plant, the energy system based on the schedule can be based on control signals and/or comprise transmitting control signals and/or commands to the providers and/or consumers. The electronic control unit, in particular the power plant, can be configured for controlling the energy system and/or the providers and/or consumers. Controlling can comprise transmitting the schedule and/or the control signals to the technical aggregators (e.g. via the aggregator), the providers (preferably via the [corresponding] technical aggregators) and/or consumers (preferably via the [corresponding] technical aggregators). Transmitting the (whole) schedule can be advantageous since the technical aggregators, providers and/or consumers can (then) create and/or provide control signals, in particular on their own and/or independent of the electronic control unit, aggregator and/or virtual power plant). This can increase the robustness (for example when the data connection to the electronic control unit is [temporarily] lost, e.g. during a partial breakdown). Transmitting the control signals by the electronic control unit and/or virtual power plant can be advantageous for improved real-time reaction, control and/or compensation, for example when parts of the clusters, providers and/or consumers cannot be reached (regarding data connection), if they are (electrically) disconnected and/or if they (unexpectedly) cannot provide the planned energy provision and/or consumption. The electronic control unit, in particular the virtual power plant, may (then) readjust the schedule, e.g. based on recent emergency data transmitted by (at least one of) the technical aggregators, the providers and/or consumers. This means that the electronic control unit and/or virtual power plant can be configured for controlling and/or acting as (central) controller of the energy system. It is also possible, that the electronic control unit, in particular the virtual power plant, transmits control signals via the electrical grid. For example, a data connection to (sub-)systems of the electrical grid, e.g. an electrical generator and/or transformer, to which (at least one of) the providers and/or consumers are connected, can be used to transmit the control signals. Then the providers and/or consumers can be controlled by the (sub-)systems based on the control signal. Based on a control signal, a provider can for example provide and/or feed in a (certain) amount of electrical energy and/or power, in particular over a (predefined) time interval and/or according to the schedule. Based on a control signal, a consumer can for example consume, receive and/or tap of a (certain) amount of electrical energy and/or power, in particular over a (predefined) time interval and/or according to the schedule.

In the context of the present invention, a method may be provided, wherein the method comprises, in particular before calculating the cluster forecasts and/or providing cluster forecasts:
- creating and/or calculating, in particular by the plurality of technical aggregators, clusters of providers and/or consumers based on (at least one of their)
   ∘ technical specifications,
   ∘ (past) provider provision profile(s),
   ∘ (past) provider flexibility profile(s),
   ∘ (past) consumer consumption profile(s),
   ∘ (past) consumer flexibility profile(s),
   ∘ local distribution,
   ∘ electrical (inter-)connection(s), in particular location of grid connection point,
   ∘ grid limitations,
   ∘ ([rated] maximum, expected and/or planned provided and/or consumed) electrical power,
   ∘ (maximum, expected and/or planned provided and/or consumed) electrical flexibility, and/or
   ∘ (maximum, expected and/or planned provided and/or consumed) electrical storage capability,
which preferably (each) are specific for (each of) the providers and/or consumers.

As indicated above, the clusters can be formed based on physical electrical connections (e.g. for a plurality of vehicle charge points, "hard-wired"). In these cases, the clusters can (per se) be formed and/or connected via a/their corresponding technical aggregator (for example electric vehicles and/or [corresponding] charging stations). Alternatively and/or in addition, creating clusters can be performed by the electronic control unit, in particular the aggregator and/or virtual power plant, and/or by (at least one of) the plurality of technical aggregators, in particular virtually and/or by calculation. Creating can be based on (the above) data, which can be specific for the providers and/or consumers. The providers and/or consumers can provide the data to the electronic control unit and/or technical aggregator(s), e.g. by transmission via corresponding data connections. Creating can comprise performing (electrical) network simulations and/or forecasts regarding flexibility and/or predictions of overloads. For example, creating clusters can be based on minimizing the potential for electrical (power) overloads, e.g. by overload forecasting (for the future time interval). A plurality of different clusters may be calculated and/or simulated, in particular with the aim to minimize (the probability of) overloads, as for example described in the following source:
- "Recurrent Neural Networks for Short-Term Load Forecasting - An Overview and Comparative Analysis", Bianchi et al., 2017, ISBN 978-3-319-70337-4, in particular chapter 7.

Alternatively and/or in addition, the cluster forecast may also be based on ARIMA (Auto-Regressive Integrated Moving Average) and/or SARIMA (Seasonal Auto-Regressive Integrated Moving Average). Therefore, the provider forecasts and/or consumer forecasts may be used as input, preferably in the form of time-series and/or (1D-)vectors. The cluster forecasts may be calculated by the technical aggregators. A model may be created and trained configured to predict and/or calculate the cluster forecast, in particular with respect to energy provision, consumption and/or flexibility. This can be performed based on (corresponding) historical data, in particular comprising past cluster forecasts, past provider forecasts and/or past consumer forecasts (formatted as described above). The ARIMA and/or SARIMA model may comprise three components:
- an autoregressive (AR) part, which can be configured to use and/or receive the above inputs to predict the cluster forecasts,
- an integrated (I) part, which can be configured for differencing the time-series to achieve stationarity, and
- a moving average (MA) part, which can be configured to incorporate past forecast errors into the prediction.

When using SARIMA, the model may be based and/or using seasonal data and/or calendar information. This can (better) incorporate trends (on a time-base) and/or seasonal patterns, which can be specific for the use of providers and/or consumers (e.g. by their owners). For example, electricity demand might increase during certain hours of the day or specific seasons (e.g. winter). In such cases, the ARIMA model can be extended to a Seasonal ARIMA (SARIMA) model to better capture these regular fluctuations. During training and/or application (constantly improving the mode), applying the model can comprise identifying the appropriate orders of the autoregressive, integrated and/or moving average part, which preferably can be achieved by analyzing statistical measures, in particular like the autocorrelation function (ACF) and partial autocorrelation function (PACF). After determining the best-fit parameters, the model can be trained using historical data, validated, and/or then used to forecast future observations, in particular cluster forecasts.

Overall, the ARIMA approach is valued in energy market applications for its ability to provide interpretable and reliable forecasts, making it a practical tool for operational planning, load management, and price forecasting in the energy sector.

Additional information can be found in the following textbook:
- "Forecasting: Principles and Practice" Hyndman, Athanasopoulos, published 6 May 2018, ISBN-10 0987507117

In the context of the present invention a bottom-up forecasting approach may be used. This can mean, that the provider forecasts and/or consumer forecasts provide a (first-level) basis for a future time-interval. The provider forecasts and/or consumer forecasts may comprise data based on which the cluster forecasts can be calculated. Then the cluster forecasts can merge these forecasts (second-level) and preferably increase the prediction accuracy. Then a combined forecast (third-level) for all the clusters can be provided. Finally, the electronic control unit, in particular the virtual power plant, can provide a bid (fourth-level), preferably to an exchange for provision of energy and/or flexibility. Each level may be based on purely deterministic merging of the inputs (e.g. by summation of provider forecasts/profiles and consumer forecasts/profiles to provide a cluster forecast. However, the accuracy may be improved by more detailed planning (see below/above).

Alternatively and/or in addition, creating can be based on the (current) provider forecasts and/or consumer forecasts, in particular providers and consumers can be clustered and/or aggregated in a cluster, which (already) comprise a high degree of flexibility and/or compensation to each other. In other words, (groups of) providers and/or consumers can be combined, by optimizing their (corresponding) cluster forecast and/or minimizing at least one of (their):
- cluster provision profile,
- cluster consumption profile,
- cluster flexibility profile, and/or
- cluster storage profile.

The cluster storage profile(s) may also be part of and/or included in the cluster flexibility profile. Therefore, an average value and/or moving average may be calculated (of such profiles), for example for the future time interval. A cluster may be created if this average value is minimized (compared to other calculated and/or simulated clusters).

In the context of the present invention, a method may be provided, wherein the method comprises, in particular before calculating the cluster forecasts and/or before creating clusters of providers and consumers:
- connecting, in particular via a data connection, at least one technical aggregator, in particular of the plurality of technical aggregators, to the electronic control unit, in particular the aggregator, and/or
- registering the at least one technical aggregator, in particular of the plurality of technical aggregators, by the electronic control unit, in particular the aggregator.

By connecting and/or registering, the (at least one) technical aggregator may be included by the electronic control unit and/or for calculating a combined forecast (and/or any of the other subsequent steps). Connecting and/or registering can allow for new technical aggregators to participate in the provision of a combined forecast. Otherwise, the corresponding technical aggregator, providers and/or consumers might not be able to profit from (large-scale) advantages (e.g. receiving flexibility) provided by the (central) handling and/or the electronic control unit. The other technical aggregators, providers and/or consumers profit from increased flexibility and/or improved costs, e.g. when providing electrical energy/power and/or flexibility in a bundle, in particular via a combined forecast. Connecting and/or registering may be performed at any point in time, in particular before a bid is placed at the/an exchange. After connecting and/or registering, the technical aggregator may transmit and/or provide a (corresponding) cluster forecast. This can be incorporated and/or used in/for (the next) future time interval. Connecting and/or registering may be performed (after and/or in parallel) to (electrically) connecting the providers and/or consumers (of the cluster) to the electrical grid and/or connecting (preferably via a data connection) to the electronic control unit. Advantageously, any company, technical aggregator, (energy) pool, provider and/or consumer can (consequently) participate in centralized and/or combined power and/or flexibility provision and/or consumption.

Interfaces for measurements, in particular at the providers and/or consumers, and/or data communication, in particular between providers, consumers, technical aggregators and/or the electronic control unit, can comprise and/or be based on:
- OCPP (Open Charge Point Protocol),
- Home Energy Management Module (HEMS) via Modbus / EEBUS,
- IEC 61850,
- MQTT (Message Queuing Telemetry Transport),
- Direct EV Control via OEM Cloud Backend,
- ISO 15118 Standards (ISO 15118-2 and ISO 15118-20),
- smart meters, and comparable sensors, in particular of the providers and/or consumers, and/or
- Home Energy Management Systems (HEMS).

This can allow for transmission of corresponding forecasts and/or information about the providers/consumers.

In the context of the present invention, a method may be provided, wherein the method comprises, in particular before providing the cluster forecasts:
- calculating, in particular by a/the plurality of (external) technical aggregators, the cluster forecasts comprising planned energy provision and/or planned energy consumption of clusters based on
   ∘ (individual) provider forecasts, which are specific for at least planned energy provision of the providers, in particular for the future time interval and/or
   ∘ (individual) consumer forecasts, which are specific for at least planned energy consumption of the consumers, in particular for the future time interval,
the method preferably comprising, in particular by providing, before providing and/or (before) calculating (the combined forecast):
- transmitting the cluster forecasts from the technical aggregators to the electronic control unit, in particular to the aggregator,
- receiving, by the electronic control unit, in particular the aggregator, the cluster forecasts.

As described above, clusters can be created and/or provided by the plurality of technical aggregators. Calculating, by the plurality of technical aggregators, can comprise merging/combining the (individual) provider forecasts and/or (individual) consumer forecasts, in particular of each and/or separately for each cluster. Calculating, by the plurality of technical aggregators, can (at least) be performed based on the (different):
- provider provision profile(s),
- provider flexibility profile(s),
- provider storage profile(s),
- consumer consumption profile(s),
- consumer flexibility profile(s), and/or
- consumer storage profile(s),
which preferably all are specific for an (identical) future time interval, e.g. a 15-minute time interval tomorrow morning at 8 am. Calculating can (in a simple case) comprise summation and/or integration of the provider forecasts and/or consumer forecasts, in particular with respect to their time dependency and/or the future time interval. For example, (all) provider provision profiles and all consumer consumption profiles are summed up (for each discrete time point of the future time interval).

In the context of the present invention, a method may be provided, wherein each of the cluster forecasts comprises, in particular by calculating the cluster forecasts, at least one of:
- a cluster provision profile (of the/each specific cluster) comprising a planned provided electrical power over time (for the/each specific cluster), which is specific for the future time interval, and/or
- a cluster consumption profile (of the/each specific cluster) comprising a planned consumed electrical power over time (for the/each specific cluster), which is specific for the future time interval, and/or
- a cluster flexibility profile (of the/each specific cluster) comprising a planned electrical flexibility over time (for the/each specific cluster), which is specific for the future time interval, and/or
- a cluster storage profile (of the/each specific cluster) comprising a planned electrical storage over time (for the/each specific cluster), which is specific for the future time interval. The cluster storage profile(s) may also be part of and/or included in the cluster flexibility profile.

A (calculation of the) cluster provision profile(s) can be based on the provider provision profiles (of a specific cluster), for example by summation and/or integration of (all) the provider provision profiles. A (calculation of the) cluster consumption profile(s) can be based on the provider consumption profiles (of a specific cluster), for example by summation and/or integration of (all) the provider consumption profiles. A (calculation of the) cluster flexibility profile(s) can be based on the provider flexibility profiles (of a specific cluster), for example by summation and/or integration of (all) the provider flexibility profiles. A (calculation of the) cluster storage profile(s) can be based on the provider storage profiles and/or consumer storage profiles (of a specific cluster), for example by summation and/or integration. In addition and/or alternatively calculating cluster forecasts may (at least partly) be based on predictive modelling and/or machine learning. For example, a predictive modelling and/or machine learning model may be provided and/or trained, in particular by/for each technical aggregator, which uses the provider forecasts and/or consumer forecasts as input, for example in the form of a concatenated (1D) vector. In addition, inputs may comprise:
- location (of the providers and/or consumers), and/or
- weather forecasts, which preferably are specific for the future time interval.

In the context of the present invention, a method may be provided, wherein the method comprises, in particular before calculating the cluster forecasts:
- providing, by the providers, in particular to (one of) the plurality of technical aggregators, provider forecasts which are at least specific for planned energy provision of the providers, and/or
- providing, by consumers, in particular to (one of) the plurality of technical aggregators, consumer forecasts which are at least specific for planned energy consumption of the consumers.

Each provider and/or consumer can provide a provider forecast and/or consumer forecast to (exactly or at least) one/a technical provider, in particular to a technical provider which is specific for the cluster the provider and/or consumer is included in.

The providers and/or consumers may provide and/or transmit the provider forecasts and/or consumer forecasts to a superordinate and/or corresponding technical aggregator (of the plurality of technical aggregators).

The provider forecasts and/or consumer forecasts may (also) comprise (their corresponding):
- location,
- electrical connection(s),
- technical specifications (identifier, model number, maximum power et cetera),
- mathematical model (configured for use in simulation, predictive modelling and/or a machine learning model), and/or
- time stamp and/or information about the future time interval (used for the forecast and/or planning),
which preferably are specific for each and/or the (corresponding) provider and/or consumer. In other words, the providers and/or consumers provide (sufficient) information to following entities (e.g. the technical aggregator, aggregator and/or virtual power plant) to calculate a cluster forecast and/or combined forecast. The provider forecasts and/or consumer forecasts may also be provided by the technical aggregators to the electronic control unit, in particular the aggregator and/or virtual power plant.

Each/a provider forecast can (at least) comprise a (time-dependent):
- provider provision profile,
- provider flexibility profile, and/or
- provider storage profile,
which preferably is/are specific at least for the future time interval, and/or for a planned energy provision, flexibility and/or storage of a (single) provider. The consumer storage profile(s) may also be part of and/or included in the consumer flexibility profile. The provider provision profile may at least comprise a planned energy provision of the provider. The provider flexibility profile may at least comprise a planned energy flexibility of the provider, preferably to what extent / amount (e.g. 10%) the provider may accept and/or tolerate deviation, in particular with respect to the provider provision profile. The provider storage profile may at least be specific for a stored (electrical) energy of the provider, in particular regarding (temporal) storage and/or buffering capabilities. The provider provision profile, provider flexibility profile, and/or provider storage profile may (each) be represented in the form of time-series and/or (1D) vectors, e.g. covering a future time interval of 15 minutes with 900 values (1s spacing). Alternatively and/or in addition the provider forecast include and/or may be based on:
- an overall (desired/planned) provision of the provider, e.g. 50 kWh (within the next 12 hours), for example when discharging an energy storage,
- a maximum power (specific for the provider), e.g. maximum power for feed-in of 10 kW,
- a provider-specific time interval, e.g. 12 hours, for example available for feed-in of an overall provision of the provider,
- a weather forecast,
- calendar information,
- historical data which is specific for past time-dependent power provision of the provider (e.g. incorporating past time-dependent power consumption of a household with a photovoltaic system which may consequently reduce the provision of energy), and/or
- a mathematical model and/or simulation model of the provider.

For example, a provider like a nuclear power plant can provide a planned energy provision of (constantly) 1 GW, e.g. for the next 24 hours and/or (consequently) for the/each future time interval. The provider provision profile may therefore comprise a value of 1 GW for each time point of the future time interval (e.g. a 15-minute time interval starting in 8 hours from now). Consequently, the provider provision profile may comprise a discrete time series and/or 1D-vector (with 900 entries), with (identical) values of 1 GW for e.g. 900 time points covering the 15-minute interval (1s spacing). The provider flexibility profile may comprise an analogous structure. However, the flexibility of a nuclear power plant may be limited or even zero (e.g. since variation and/or a shutdown is technically undesired). The provider storage profile may comprise an analogous structure. However, the storage capabilities of a nuclear power plant may be limited (or even zero), e.g. (constantly) 10 MW in the/each specific future time interval.

For example, a provider like a wind/solar power plant can provide a planned energy provision of 1 MW, e.g. for the next 24 hours and/or (consequently) for the future time interval. However, there may be a (large) amount of variation (e.g. compared to a nuclear power plant) due to changing weather conditions (variation in wind/cloud coverage). The provider provision profile may therefore represent varying power values (e.g. between 0 and 1 MW) for the time points of the future time interval (e.g. an identical 15-minute time interval starting in 8 hours from now). Consequently, the provider provision profile may comprise a discrete time series and/or 1D-vector (with 900 entries), with (varying) values for e.g. 900 time points covering the 15-minute interval (1s spacing). The provider flexibility profile may comprise an analogous structure. However, the flexibility of a wind/solar power plant may be comparably large, e.g. 100% for each point in time (e.g. with respect to reducing/stopping the provision of energy, for example by simply blocking the rotation of a wind power plant). The provider storage profile may comprise an analogous structure. However, the storage capabilities of a wind/solar power plant may be limited (or even zero), e.g. compared to a (large-scale) accumulator and/or pumped storage power station.

Providing, by consumers, in particular to the plurality of technical aggregators, consumer forecasts which are at least specific for planned energy consumption of the consumers can comprise, that each consumer provides a specific consumer forecast to at least one / exactly one technical aggregator of the plurality of technical aggregators.

Each/a consumer forecast can (at least) comprise a (time-dependent):
- consumer provision profile,
- consumer flexibility profile, and/or
- consumer storage profile,
which preferably is/are specific at least for the future time interval, and/or for a planned energy consumption, flexibility and/or storage of a (single) consumer. The consumer storage profile(s) may also be part of and/or included in the consumer flexibility profile. The consumer consumption profile may at least comprise a planned energy consumption of the consumer. The consumer flexibility profile may at least comprise a planned energy flexibility of the consumer, preferably to what extent / amount (e.g. 10%) the consumer may accept and/or tolerate deviation, in particular with respect to the consumer consumption profile. The consumer storage profile may at least be specific for a stored (electrical) energy of the consumer, in particular regarding (temporal) storage and/or buffering capabilities. The consumer consumption profile, consumer flexibility profile, and/or consumer storage profile may (each) be represented in the form of time-series and/or (1D) vectors, e.g. covering a future time interval of 15 minutes with 900 values (1s spacing). Alternatively and/or in addition the consumer forecast include and/or may be based on:
- an overall (desired/planned) consumption of the consumer, e.g. 50 kWh (within the next 12 hours), for example when charging an electric vehicle,
- a maximum power (specific for the consumer), e.g. maximum power for charging of 10 kW,
- a consumer-specific time interval, e.g. 12 hours, for example available for receiving an overall consumption of the consumer,
- a weather forecast,
- calendar information,
- historical data which is specific for past time-dependent power consumption of the consumer, and/or
- a mathematical model and/or simulation model of the consumer.

Provider forecasts and/or consumer forecasts may be fixed and/or constant (e.g. 2 MW for the next 24 hours). This can mean, that the flexibility is zero or also fixed (e.g. to 10% of the values of the consumer consumption profile and/or provider provision profiles). Alternatively, provider forecasts and/or consumer forecasts, in particular provider provision profiles, provider flexibility profiles, consumer consumption profiles and/or consumer flexibility profiles, may be calculated and/or determined (more precisely) based on the above described inputs. For example, models like or analogously as disclosed in the following publication may be used:
- "Recurrent Neural Networks for Short-Term Load Forecasting - An Overview and Comparative Analysis", Bianchi et al., 2017, ISBN 978-3-319-70337-4, in particular chapter 7.

This can be advantageous to reduce the amount of uncertainty and/or to optimize the (overall) flexibility.

For example, a consumer like an electric vehicle and/or a charging station for electric vehicles may provide a planned energy consumption of 4 kW, e.g. for the next 12 hours and/or (consequently) for the future time interval. However, the overall (desired/planned) consumption of the consumer, e.g. 50 kWh (within the next 12 hours), may be the most important characteristic for the consumer (or more precisely the owner of the consumer). It may be irrelevant when exactly the charging of an electric vehicle is finished as long as e.g. it is finished before the next 12 hours lapse. Therefore, the amount of variation may be comparably high (as long as e.g. the charging does not have to be performed with maximum power, for example with 10 kW, over the full 12 hours). The consumer consumption profile may therefore represent varying power values (e.g. between 0 and 10 kW) for the time points of the future time interval (e.g. an identical 15-minute time interval starting in 8 hours from now). Consequently, the consumer consumption profile may comprise a discrete time series and/or 1D-vector (with 900 entries), with (varying) values for e.g. 900 time points covering the 15-minute interval (1s spacing). The consumer flexibility profile may comprise an analogous structure. However, the flexibility of an electric vehicle and/or charging station may be comparably large, e.g. 100% for each point in time (e.g. with respect to reducing/stopping the provision of energy, for example by simply [temporarily] stopping the charging). The consumer storage profile may comprise an analogous structure. The storage capabilities of an electric vehicle for example may be (at least temporarily) provided for other consumers and/or providers. For example, the consumer storage profile may constantly and/or in certain time intervals comprise 2 kW of electrical energy which could be provided.

For example, a consumer comprising a building might have a consumer consumption profile based on the use of the building. An office building can comprise a certain basic consumption and an increased consumption during day time, in particular during working days. Consequently, the consumer consumption profile may comprise increased (constant/identical) values from 7 am to 6 pm compared to lower (constant/identical) values during the rest of the day. The corresponding consumer flexibility profile and/or consumer storage profile might be zero.

In the context of the present invention, a method may be provided, wherein calculating a combined forecast comprises merging and/or combining the cluster forecasts (e.g. by calculation), wherein the combined forecast comprises at least one of:
- a combined provision profile (at least) comprising a planned provided electrical power over time, which is specific for the future time interval and/or for the clusters,
- a combined consumption profile (at least) comprising a planned consumed electrical power over time, which is specific for the future time interval and/or for the clusters,
- a combined flexibility profile (at least) comprising a planned electrical flexibility over time, which is specific for the future time interval and/or for the clusters, and/or
- a combined storage profile (at least) comprising a planned electrical storage (capacity) over time, which is specific for the future time interval and/or for the clusters. The combined storage profile(s) may also be part of and/or included in the combined flexibility profile.

The combined forecast can be specific for all clusters. Consequently, the combined forecast can be specific for all providers and consumers. This can be advantageous to provide the combined forecast and/or a (corresponding) bid at an exchange. Thus, the energy and/or flexibility of all providers and/consumers can be incorporated in large-scale planning and/or exchanging.

Calculating the combined forecast can be based on the cluster forecasts, which preferably can be used as input. This can be based on summation and/or integration.

The combined provision profile can be calculated based on a (time-point-wise) summation and/or integration (of parts of or all) of the cluster provision profiles, in particular for the (identical) future time interval. The combined provision profile can (consequently) comprise and/or be specific (at least) for a planned provided electrical power over time and/or the future time interval for (all) the clusters, providers and/or consumers.

Alternatively, the combined forecast can also be calculated using a trained model (see below).

The combined consumption profile can be calculated based on a (time-point-wise) summation and/or integration (of parts of or all) of the cluster consumption profiles, in particular for the (identical) future time interval. The combined consumption profile can (consequently) comprise and/or be specific (at least) for a planned consumed electrical power over time and/or the future time interval for (all) the clusters, providers and/or consumers.

The combined flexibility profile can be calculated based on a (time-point-wise) summation and/or integration (of parts of or all) of the cluster flexibility profiles, in particular for the (identical) future time interval. The combined flexibility profile can (consequently) comprise and/or be specific (at least) for a planned provided electrical flexibility over time and/or the future time interval for (all) the clusters, providers and/or consumers.

The combined storage profile can be calculated based on a (time-point-wise) summation and/or integration (of parts of or all) of the cluster storage profiles, in particular for the (identical) future time interval. The combined storage profile can (consequently) comprise and/or be specific (at least) for a planned provided electrical storage over time and/or the future time interval for (all) the clusters, providers and/or consumers.

In the context of the present invention, a method may be provided, wherein calculating a combined forecast, and/or in particular creating clusters, is based on predictive modelling and/or machine learning, which can provide a trained model for calculating the combined forecast.

The cluster forecasts, provider forecasts and/or consumer forecasts may be forwarded and/or transmitted (via data communication, e.g. the internet) to the electronic control unit, in particular to the aggregator and/or virtual power plant, and (there) can preferably be used as input (data). The input (data) can comprise the corresponding location, electrical connections, mathematical model(s) and/or technical specifications, in particular of the (corresponding) technical aggregators, providers and/or consumers (see above). In addition, the electronic control unit and/or aggregator may use and/or add the following information, in particular based on the aforementioned data:
- a weather forecast, preferably including solar radiance, cloud coverage and/or wind power (and corresponding distributions), which is in particular specific for the location(s) of the providers and/or consumers, e.g. in particular covering all locations,
- a load and/or overload forecast, which is in particular specific for the specific locations, electrical connections and/or mathematical models, and/or
- (current) tariff data, which preferably is specific for the exchange(s) the electronic control unit is connected with.

The model may be created based on (simple) simulations (for/of the future time interval), in particular (deterministic) simulations of the electrical grid, the providers, consumers and/or (corresponding) electrical connections. The simulations may be based on the aforementioned data. The simulations may preferably be based on (the) weather forecast(s). This can increase the precision of the (combined) flexibility profile/forecast (e.g. for providers based on renewable energy), in particular compared to the cluster forecasts and/or a (simple) summation/integration of the cluster forecasts, in particular since uncertainties can (statistically) be reduced and/or minimized. This can allow for a more precise prediction / forecast of electrical flexibility, provision and/or consumption.

For calculating, in particular during an application phase of the (trained) model, the input may be fed to the electronic control unit and/or aggregator, in particular comprising (at least) the cluster forecasts (see above) and/or (corresponding) provider forecasts and/or consumer forecasts. These input (data) can comprise data in the form of time-series and/or (discrete) 1D-vectors. Those can be concatenated to form an input matrix and/or (concatenated input vector). The (trained) model can be configured (and/or trained) for calculating and/or forecasting the combined forecast (as output). The combined forecast can (again) comprise data in the form of time-series and/or (discrete) 1D-vectors, in particular for the combined provision profile, combined consumption profile, combined flexibility profile and/or combined storage profile. Alternatively, those can be concatenated to a vector or matrix (for further handling). **In** the simplest case, the different data can be based on (discrete and/or future) 15-minute time intervals (e.g. with 900 discrete and/or equidistant time points, e.g. see examples above). Consequently, (each) of the (single) inputs and/or outputs can comprise identical shape (preferably as time-series) and/or be recalculated to comprise such shape (e.g. by alignment, interpolation and/or extrapolation with respect to time).

The (trained) model may be created, e.g. by the electronic control unit and/or a (larger) computing system (e.g. a server farm), based on a training phase and/or training. The model may be trained (in the training phase) by starting with a random initialization of the model, in particular of the weights of the model. Training data may (primarily) comprise historical provider forecasts, consumer forecasts and/or weather forecasts, preferably for subsequent future time intervals, e.g. of 15-minute length (see above). The training data may also comprise test data, which can preferably comprise a ground truth for corresponding subsequent time intervals, e.g. comprising the actual provided/consumed energy/flexibility for the subsequent time intervals.

The model can comprise an artificial neural network, which can comprise an information technology structure that can "learn" a functional relationship between input (signals and/or vectors) and output (e.g. a vector) by appropriate training: $Output = f \left(Input\right) .$

An artificial neural network can comprise a plurality of neurons (also called nodes) that are interconnected. The neurons are usually arranged in a plurality of layers. A first layer can be formed by an input layer of neurons to which the individual elements of the input are provided. Each neuron of the input layer is preferably supplied with one element of the input signal. On the output side, the artificial neural network can comprise an output layer whose neurons each represent individual elements of the output. Between the input layer and output layer there can be one or more (hidden-)layers of (hidden-) neurons. The neurons of the input layer are preferably connected to all or selected neurons of the first layer of hidden neurons. These in turn can be connected to all or selected neurons of a possible second layer of hidden neurons, et cetera. The last layer of hidden neurons can finally be connected to the neurons of the output layer. The behavior (and performance) of a neural network and thus the response of the neurons of the output layer to input(s) applied to the neurons of the input layer is defined by training parameters. These training parameters represent, for example, threshold values above which a neuron emits a signal to a subsequent neuron, and/or weighting factors for the probability of a signal transmission between two particular subsequent neurons. For training (and/or learning) several methods may be utilized. Using, e.g. the "multilayer perceptron" method, the neural network is first presented with a series of inputs (e.g. in vector format) and a series of outputs (e.g. in vector format) that are known to match the input vectors. The outputs calculated by the neural network can be compared with the given outputs. The differences between the calculated and expected values can be evaluated and used to modify the parameters, in particular the weighting factors, of the neural network's calculation algorithm (also referred to as "backpropagation"). Training is complete as soon as the neural network's calculation results match the expected values with sufficient accuracy. The training phase can particularly end and/or be terminated when the model and/or training converges. The mean absolute error can be calculated between outputs/forecasts provided by the trained model and test data for which the (real) forecast is known. When the mean absolute error reaches a lower boundary (e.g. of 1%) the training may be considered as being converged.

The training may be repeated several times, for example 500 times, to provide several trained models. The performance of such models can be compared by inputting (identical) test input data for which corresponding output data (e.g. a combined forecast in this case) is available. The trained model with the best performance can then be used (as trained model) later and/or in the application phase.

The model can comprise/be a recurrent neural network, in particular comprising (only) long-short term memory (LSTM) cells. The core of the LSTM architecture can be a/the memory cell(s), which uses multiple gating mechanisms to control the flow of information. Preferably, all LSTM cells are identically structured. Unlike a basic RNN that applies a single nonlinearity, the LSTM cell includes several components that together allow it to capture long-term dependencies, in particular of time-series. Each/a cell may comprise a forget gate, configured for regulating the retention of information from the previous cell state. It can be computed as: ${σ}_{f} \left[t\right] = σ \left({W}_{f}⋅x\left[t\right]+{R}_{f}⋅y\left[t-1\right]+{b}_{f}\right)$ where:
- *σ* denotes the sigmoid activation function;
- *W_{f}* is the input weight matrix for the forget gate;
- *x*[*t*] is the input vector at time (step) *t*;
- *R_{f}* is the recurrent weight matrix;
- *y*[*t* - 1] is the output from the previous time step;
- *b_{f}* is the bias vector for the forget gate.

An input (or update) gate can be configured to determine the extent to which new information is incorporated into the cell state. Two quantities can be computed:
Candidate state: $\hat{h} \left[t\right] = {g}_{1} \left({W}_{h}⋅x\left[t\right]+{R}_{h}⋅y\left[t-1\right]+{b}_{h}\right)$
Update gate: ${σ}_{u} \left[t\right] = σ \left({W}_{u}⋅x\left[t\right]+{R}_{u}⋅y\left[t-1\right]+{b}_{u}\right)$ where:
   - *g*₁ is implemented as the hyperbolic tangent function (tanh);
   - *Wₕ* and *Rₕ* are the weight matrices for the candidate state;
   - *bₕ* is the bias for the candidate state;
   - *Wᵤ*, *Rᵤ,* and *bᵤ* correspond to the input gate parameters.

The new cell state can be computed by combining the candidate state and the previous cell state, each modulated by the input and forget gates: $h \left[t\right] = {σ}_{u} \left[t\right] ⊙ \hat{h} \left[t\right] + {σ}_{f} \left[t\right] ⊙ h \left[t-1\right]$

The output gate can be configured to control the information passed to the output: ${σ}_{o} \left[t\right] = σ \left({W}_{o}⋅x\left[t\right]+{R}_{o}⋅y\left[t-1\right]+{b}_{o}\right)$ and the final output of the cell can (consequently) be: $y \left[t\right] = {σ}_{o} \left[t\right] ⊙ {g}_{2} \left(h\left[t\right]\right)$

Here, *g*₂ can be the tanh function, and ⊙ denotes element-wise multiplication. This structure can enable error signals to backpropagate through many time steps t without vanishing, which can be highly advantageous for capturing long-term dependencies. Consequently, the architecture can capture long-term dependencies that are advantageous in forecasting (e.g. when calculating the combined forecast).

Training can be carried out by unfolding the RNN through time and applying the backpropagation through time (BPTT) algorithm. Due to the cyclic nature of the network, BPTT can be truncated after a predetermined number of steps (τ*_{b}*), preferably to keep computational complexity in check while mitigating issues related to vanishing or exploding gradients. For example, the predetermined number of steps can comprise: ${τ}_{b} = 45$

Preferably a gradient descent method is used, in particular stochastic gradient descent (SGD) with momentum, Nesterov momentum, and an adaptive Adam optimizer are employed. The training configuration can be determined through a random search over hyperparameters.

The above weight matrices (*W_{f}, Wₕ, Wᵤ, Wₒ*) and the recurrent matrices (*R_{f}*, *Rₕ*, *Rᵤ, Rₒ*) can preferably be trained along with the respective bias vectors. To counteract the vanishing gradient problem, these weights can be initialized by sampling uniformly from an interval (e.g., [0, 1]) and/or (then) rescaled by $1 / √ {N}_{h}$, where *Nₕ* is the number of hidden nodes. For example, in the LSTM implementation the number of hidden nodes can be *Nₕ* = {23, 34, 41, 56}, in particular to ensure an approximately constant number of trainable parameters.

Dropout regularization can be applied to both the input and/or recurrent connections. The drop out mast can be constant and/or consistent across time steps during BPTT so as not to disrupt the temporal correlations within the cell state.

Regularization techniques, in particular comprising L1 and L2 penalties, can be applied uniformly to the input, recurrent, and output weight matrices to prevent overfitting.

Additional (hyper-)parameters can include:
- number of epochs can be between 1000 and 5000, preferably 2100,
- learning rate *η* = 0.00719,
- number of new time steps processed before computing the BPTT *τ_{f}* = 25,
- L1 regularization parameter *λ*₁ = 0, and/or
- L2 regularization parameter *λ*₂ = 0.0087,

Additional information can be found via the following link (version 17 February 2025, 5:23 pm), in particular in chapters 10.10 to 10.12:
https://www.deeplearningbook.org/contents/rnn.html

The model may also be adjusted and/or re-trained, in particular by repeating the above training, preferably based on new data from (lately used) time intervals, for which the outcome/ground truth is (later) known. Consequently, the method can be configured to be self-learning.

In the context of the present invention, a method may be provided, wherein the method comprises, in particular before providing the schedule:
- providing, offering and/or placing, by the electronic control unit, preferably the virtual power plant, the combined forecast and/or a (corresponding) bid which is specific for the combined forecast on an (external) exchange configured for at least an exchange of electrical energy and/or electrical flexibility, and/or
- receiving, by the electronic control unit, preferably the virtual power plant, a parameter set received from the exchange, wherein in particular the parameter set is configured and/or used as a basis for providing the schedule.

The bid may comprise the combined forecast and/or (all) components of the combined forecast. For example, the bid may comprise the combined provision profile, combined consumption profile, combined flexibility profile and/or combined storage profile. Alternatively, the bid may comprise reduced information, for example comprising (only) the combined provision profile and/or combined consumption profile. Preferably, the bid only comprises a combined flexibility value, e.g. a scalar value which is specific for the future time interval and/or not specific for the specific technical aggregators (and corresponding providers and/or consumers). Alternatively, the bid may comprise additional information, in particular (all) the cluster forecasts of the plurality of technical aggregators and/or (even) the provider forecasts and/or consumer forecasts. This can be advantageous for better planning/exchanging and/or to at least partly fulfill the requirements, e.g. of the plurality of technical aggregators (for as many as possible). The bid may also be based on information received by the exchange. For example, the exchange can provide required flexibility profiles and/or exchange parameters based on which the electronic control unit, in particular the virtual power plant, can calculate the bid. Alternatively and/or in addition the bid may (also) be based on the combined forecast.

The bid is preferably specific for the future time interval. The bid is preferably provided to the exchange before the future time interval actually begins and/or starts. In other words, the bid can comprise information which is specific for the future time interval, in particular including the duration, starting point, end point and/or spacing between time points within the future time interval. The bid may also comprise information about a desired point in time for fulfillment, e.g. the latest point in time at which the bid should be realized and/or accepted by the exchange and/or another electronic control unit (which controls other providers and consumers) using the exchange. For example, another electronic control unit may accept the bid, in particular due to a (at least approximately) complementary combined forecasts (of the other electronic control unit). This can mean, that the other electronic control unit (or [more precisely] the other providers and/or consumers) is able to consume/receive energy according (or complementary) to the combined provision profile, provide/feed-in energy according (or complementary) to the combined consumption profile, provide/receive electrical flexibility according (or complementary) to the combined flexibility profile and/or provide/receive electrical storage (capabilities) according (or complementary) to the combined storage profile. This may ensure, that the combined forecast, provider forecasts and/or consumer forecasts can be realized as planned.

The exchange can be configured for at least an exchange of electrical energy and/or electrical flexibility. In other words, the combined forecast, in particular comprising a combined provision profile, combined consumption profile, combined flexibility profile and/or combined storage profile, can be comprised and/or represented in the bid (e.g. a specific data structure, which may be specific for the exchange). The bid can be transmitted to the exchange, preferably via a specific interface of the exchange and/or a data transmission line. The bid can be provided, offered and/or placed on and/or by the exchange. The exchange can comprise a platform configured for exchanging electrical energy/power, electrical flexibility, grid balance and/or compensation, in particular to other electronic control units coupled to a plurality of providers and/or consumers. For example, these other electronic control units, providers and/or consumers can be specific for a different region, different sector (e.g. public, private and/or industry) and/or country. Advantageously, the combined forecast and/or bid provides the ability to (each of the technical aggregators of) the plurality of technical aggregators, providers and/or consumers, to participate, in particular regarding provision of electrical energy/power, consumption of electrical energy/power, electrical flexibility and/or storage capabilities. An exchange may comprise and/or be an energy exchange platform, a transmission system operator (TSO), an independent system operator (ISO), regional transmission organization (RTO) and/or an energy only market, or preferably be (at least) connected to such other electronic control units / entities. The exchange may be configured to provide and/or find a match for the combined forecast, which preferably is complementary. In a simple case, the exchange finds another combined forecast which is exactly complementary to the combined forecasts, such that for example the provision profile is complementary to the other consumption profile (and vice versa). If no exact match can be found, the exchange can find approximately well-fitting matches, preferably based on the (other) combined flexibility profile(s).

Receiving, by the electronic control unit, preferably the virtual power plant, a parameter set received from the exchange, may be based on and/or result when another electronic control unit (at least partly) accepts the bid. The bid can be filled and/or realized unchanged and/or in its entirety (e.g. if a perfectly complementary match/bid is found). In this case, the parameter set can comprise the combined forecast and/or simply specify that the combined forecast is accepted / will be realized. However, the bid may alternatively be filled and/or accepted only partly. In this case, the parameter set is specific for amendments and/or changes (by the exchange), for example comprising changes of the combined provision profile, e.g. based on the combined flexibility profile. For example, a 10% deviation of more or less energy consumption may have been included and/or indicated by the combined flexibility profile, in that case the combined provision profile may be adjusted by the exchange and/or the other electronic control unit to better fit and/or be complementary to another combined provision profile).

The parameter set can be configured and/or be used as a basis for providing the schedule. The electronic control unit and/or virtual power plant can transform and/or translate the parameter set into the schedule. The schedule can be specific for energy provision, consumption, flexibility and/or storage capabilities (actually) provided by the providers and/or consumers. Therefore, the schedule can comprise (a plurality of) control signals for the technical aggregators, providers and/or consumers. In other words, the schedule can comprise a data structure and/or a (execution) plan for the technical aggregators, providers and/or consumers, which preferably is then implemented and/or realized, in particular during the future time interval. Consequently, the schedule can be time-dependent and/or based on the same time scale compared to the future time interval, in particular subsequent future time intervals. The schedule may also be based and/or include at least one, preferably two or more, future time interval(s). This can be advantageous, in particular, if at least one or more combined forecasts and/or bid(s) cannot be filled and/or realized (as originally) planned. The schedule can then adjust the control signals accordingly, for example such that an overall consumption specific for a certain technical aggregator can be filled at least over subsequent future time intervals (e.g. such that a pool of charging stations for electric vehicles can still provide sufficient power for charging on a larger time scale like 4 hours).

In the context of the present invention, a method may be provided, wherein the method comprises, preferably after controlling:
- reordering, in particular by the electronic control unit and/or the virtual power plant, the clusters into reordered clusters which are different from the clusters.

Before reordering and/or after controlling, the clusters may be disaggregated. This can comprise removing and/or terminating the cluster(s), in particular with the aim to form new clusters (by reordering).

Reordering can provide and/or result in a different distribution of providers and/or consumers corresponding to the reordered clusters (compared to the clusters [used before]). The reordering can be based on the cluster forecasts of the plurality of technical aggregators. For example, the electronic control unit and/or the virtual power plant can calculate optimized reordered clusters by minimizing the (overall) flexibility and/or need for (external) flexibility, preferably such that the providers and/or consumers of a specific reordered cluster provide sufficient flexibility to each other. Alternatively and/or in addition, the (overall) energy provision and/or consumption may be optimized, such that providers and/or consumers of a specific reordered cluster (primarily) provide energy to each other. Advantageously, this can lead to a reduced need of external energy provision e.g. from more distanced regions (which would lead to higher electrical losses during transmission).

In the context of the present invention, a method may be provided, wherein controlling comprises:
- controlling (at least parts of) the providers based on control signals provided by the electronic control unit, in particular via the technical aggregators and/or virtual power plant and/or (based on) a cluster specific schedule, and/or
- controlling (at least parts of) the consumers based on control signals provided by the electronic control unit, in particular via the technical aggregators and/or virtual power plant and/or aggregator and/or (based on) a cluster specific schedule, and/or
- controlling, in particular by the electronic control unit and/or virtual power plant, the energy system based on the schedule by providing control signals to (at least parts of) the providers and/or consumers via an electrical grid of the energy system.

The control signal(s) may be comprised and/or based on the schedule and/or (based on) a cluster specific schedule (for each cluster). In other words, the providers and/or consumers are controlled to implement and/or realize the schedule. The electronic control unit, in particular the virtual power plant and/or aggregator may be configured to calculate and/or provide a cluster specific schedule, in particular for each of the clusters, preferably based on the schedule and/or by disaggregating the schedule. The cluster specific schedule(s) is/are preferably transmitted to the technical aggregator(s) and/or cluster(s). The clusters and/or technical aggreagtor may control the cluster(s) based on the cluster specific schedule(s). For example, the cluster specific schedules may comprise data and/or information based on which a control of the clusters, consumers and/or providers can be realized. For example, this can include specific provision of energy and/or consumption of energy for a certain time interval and/or for the time interval. In other words, the schedule may be split and/or cluster specific schedules may be provided. This can increase the efficiency and/or reduce the probability of failure. Preferably, based on the cluster specific schedules, consumer specific schedule(s) and/or provider specific schedule(s) can be provided, in particular for controlling consumers and/or providers of a/this cluster. These can be provided and/or calculated by the technical aggregator(s) and preferably (then) be transmitted to the specific consumers and/or providers (of the cluster[s]).

According to a second aspect of the invention, the above objective problem is solved by a computer program product comprising instructions, which, when the computer program product is executed by a computer, cause the computer to implement the method according to the first aspect of the invention.

The computer program product may comprise a technical aggregator, an aggregator and/or a virtual power plant.

This means that the same technical advantages may be realized with respect to the computer program product according to the second aspect, which have already been described above for the method according to the first aspect of the invention.

According to a third aspect of the invention, the above objective problem is solved by a computer-readable storage medium in which instructions are stored which, when executed by a computer, cause the computer to implement the method according to the first aspect of the invention.

Preferably, the electronic control unit can comprise and/or be a computer.

This means that the same technical advantages may be realized with respect to the computer-readable storage medium according to the third aspect, which have already been described above for the method according to the first aspect of the invention and/or the computer program product according to the second aspect of the invention.

According to a fourth aspect of the invention, the above objective problem is solved by an electronic control unit, comprising a computing unit and/or a memory unit, in which instructions are stored which, when at least partially executed by the computing unit, implement a method according to the first aspect of the invention.

This means that the same technical advantages may be realized with respect to the electronic control unit according to the fourth aspect, which have already been described above for the method according to the first aspect of the invention and/or the computer program product according to the second aspect of the invention and/or the computer-readable storage medium according to the third aspect of the invention.

According to a fifth aspect of the invention, the above objective problem is solved by an energy system comprising an electronic control unit according to the fourth aspect.

This means that the same technical advantages may be realized with respect to the energy system according to the fifth aspect, which have already been described above for the method according to the first aspect of the invention and/or the computer program product according to the second aspect of the invention and/or the computer-readable storage medium according to the third aspect of the invention and/or the electronic control unit according to the fourth aspect of the invention.

In the context of the present invention, an energy system may be provided, wherein the energy system (in particular according to the fifth aspect) comprises (a plurality of) providers and/or consumers, wherein the providers comprise several provider asset classes and/or wherein the consumers comprise several consumer asset classes.

Preferably the providers are configured for power generation. The providers can comprise (one or more) provider asset classes, in particular comprising storage providers (e.g. accumulators and/or electric cars) and/or fuel-based providers (e.g. based on gas and/or oil) nuclear providers and/or assets based on renewable energy sources, in particular wind power, photovoltaic, et cetera.

Additional technical features, advantages and details of the invention are disclosed by the following description of the figures. The figures provide a detailed description of possible embodiments of the present invention. Therefore, the features described by the claims and the description can be realized alone or in (any) combination. The following exemplary description comprises:
- Fig. 1: a method, and
- Fig. 2: an energy system.

In the following figures identical reference signs are used for identical (or corresponding) features, in particular for different embodiments of the invention.

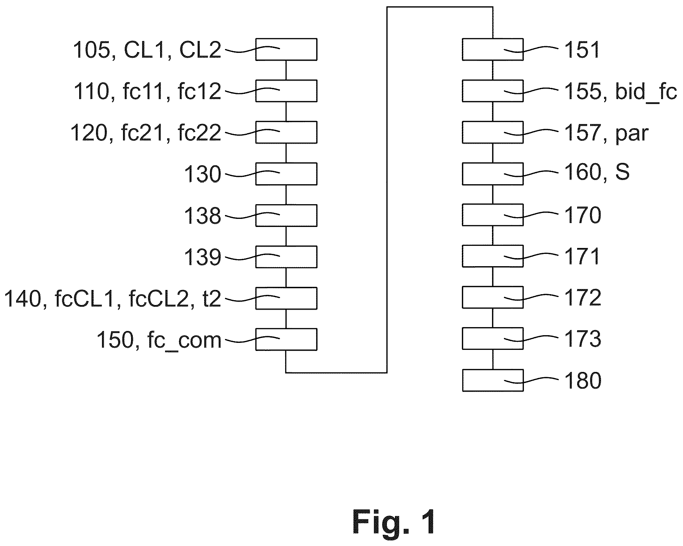

Fig. 1 shows a method for controlling an energy system 100, the energy system 100 comprising:
- an electronic control unit ECU, which preferably implements an aggregator A and a virtual power plant VPP,
wherein the method comprises:
- providing 140, by the electronic control unit ECU, preferably the aggregator A, cluster forecasts fcCL1, fcCL2 comprising planned energy provision and planned energy consumption of clusters CL1, CL2 of providers 11, 12 and consumers 21, 22, wherein the cluster forecasts fcCL1, fcCL2 are specific for a future time interval t2,
- calculating 150, by the electronic control unit ECU, preferably the aggregator A, a combined forecast fc_com, based on the cluster forecasts fcCL1, fcCL2,
- providing 160, by the electronic control unit ECU, preferably the virtual power plant VPP, a schedule S which is specific for the combined forecast fc_com and the future time interval t2,
- controlling 170, by the electronic control unit ECU, preferably the virtual power plant VPP, the energy system 100 based on the schedule S.

In the context of the present invention, a method may be provided, wherein the method comprises, in particular before calculating 130 the cluster forecasts fcCL1, fcCL2:
- creating 105, in particular by the plurality of technical aggregators TA1, TA2, clusters CL1, CL2 of providers 11, 12 and consumers 21, 22 based on at least one of their
   ∘ local distribution,
   ∘ electrical connection,
   ∘ electrical power,
   ∘ electrical flexibility, and/or
   ∘ electrical storage capability,
which preferably are specific for the providers 11, 12 and consumers 21, 22.

In the context of the present invention, a method may be provided, wherein the method comprises, in particular before calculating (130) the cluster forecasts (fcCL1, fcCL2) and/or before creating (105) clusters (CL1, CL2) of providers (11, 12) and consumers (21, 22):
- connecting (102) at least one technical aggregator (TA1, TA2), in particular of the plurality of technical aggregators (TA1, TA2), to the electronic control unit (ECU), in particular the aggregator (A), and/or
- registering (104) the at least one technical aggregator (TA1, TA2), in particular of the plurality of technical aggregators (TA1, TA2), by the electronic control unit (ECU), in particular the aggregator (A).

In the context of the present invention, a method may be provided, wherein the method comprises, in particular before providing 140 the cluster forecasts fcCL1, fcCL2:
- calculating 130, in particular by a plurality of technical aggregators TA1, TA2, the cluster forecasts fcCL1, fcCL2 comprising planned energy provision and planned energy consumption of clusters CL1, CL2 based on
   ∘ provider forecasts fc11, fc12, which are specific for at least planned energy provision of the providers 11, 12, in particular for the future time interval t2 and
   ∘ consumer forecasts fc21, fc22, which are specific for at least planned energy consumption of the consumers 21, 22, in particular for the future time interval t2,
the method preferably comprising, in particular before calculating 130:
- transmitting 138 the cluster forecasts fcCL1, fcCL2 from the technical aggregators TA1, TA2 to the electronic control unit ECU, in particular to the aggregator A,
- receiving 139, by the electronic control unit ECU, in particular the aggregator A, the cluster forecasts fcCL1, fcCL2.

In the context of the present invention, a method may be provided, wherein each of the cluster forecasts fcCL1, fcCL2 comprises at least one of:
- a cluster provision profile comprising a planned provided electrical power over time, which is specific for the future time interval t2,
- a cluster consumption profile comprising a planned consumed electrical power over time, which is specific for the future time interval t2,
- a cluster flexibility profile comprising a planned electrical flexibility over time, which is specific for the future time interval t2, and/or
- a cluster storage profile comprising a planned electrical storage over time, which is specific for the future time interval t2.

In the context of the present invention, a method may be provided, wherein the method comprises, in particular before calculating 130 the cluster forecasts fcCL1, fcCL2:
- providing 110, by the providers 11, 12, in particular to the plurality of technical aggregators TA1, TA2, provider forecasts fc11, fc12 which are at least specific for planned energy provision of the providers 11, 12, and
- providing 120, by consumers 21, 22, in particular to the plurality of technical aggregators TA1, TA2, consumer forecasts fc21, fc22 which are at least specific for planned energy consumption of the consumers 21, 22.

In the context of the present invention, a method may be provided, wherein calculating 150 a combined forecast fc_com comprises merging 151 the cluster forecasts fcCL1, fcCL2, wherein the combined forecast fc_com comprises at least one of:
- a combined provision profile comprising a planned provided electrical power over time, which is specific for the future time interval t2,
- a combined consumption profile comprising a planned consumed electrical power over time, which is specific for the future time interval t2,
- a combined flexibility profile comprising a planned electrical flexibility over time, which is specific for the future time interval t2, and/or
- a combined storage profile comprising a planned electrical storage over time, which is specific for the future time interval t2.

In the context of the present invention, a method may be provided, wherein calculating 150 a combined forecast fc_com, and/or in particular creating 105 clusters CL1, CL2, is based on predictive modelling and/or machine learning.

In the context of the present invention, a method may be provided, wherein the method comprises, in particular before providing 160 the schedule S:
- providing 155, by the electronic control unit ECU, preferably the virtual power plant VPP, the combined forecast fc_com and/or a bid bid_fc which is specific for the combined forecast fc_com, on an exchange EX configured for at least an exchange of electrical energy and/or electrical flexibility, and
- receiving 157, by the electronic control unit ECU, preferably the virtual power plant VPP, a parameter set par received from the exchange EX, wherein in particular the parameter set par is configured as a basis for providing 160 the schedule S.

In the context of the present invention, a method may be provided, wherein the method comprises, preferably after controlling 170:
- reordering 180, in particular by the electronic control unit ECU and/or the virtual power plant VPP, the clusters CL1, CL2 into reordered clusters which are different from the clusters CL1, CL2.

In the context of the present invention, a method may be provided, wherein controlling 170 comprises:
- controlling 171 the providers 11, 12 based on control signals provided by the electronic control unit ECU, in particular via the technical aggregators TA1, TA2 and/or a cluster specific schedule S1, S2,
- controlling 172 the consumers 21, 22 based on control signals provided by the electronic control unit ECU, in particular via the technical aggregators TA1, TA2 and/or a cluster specific schedule S1, S2, and/or
- controlling 173, in particular by the electronic control unit ECU, the energy system based on the schedule S by providing control signals to the providers 11, 12 and consumers 21, 22 via an electrical grid 50 of the energy system 100.

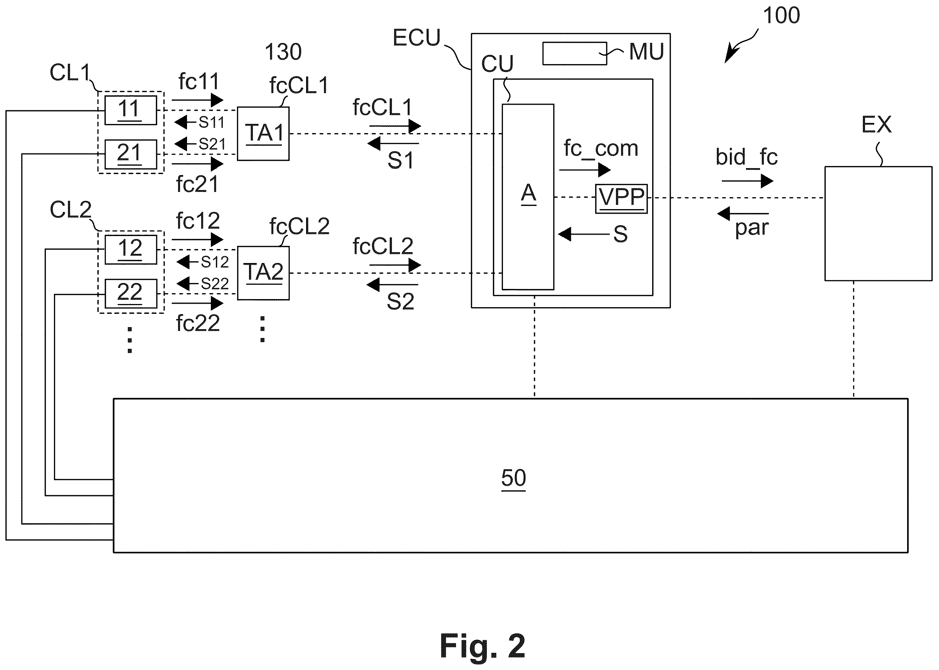

Fig. 2 shows an energy system 100, in particular according to a fifth aspect of the invention. The energy system 100 and/or the electronic control unit ECU may be configured to implement the method according to Fig. 1 and/or the first aspect of the invention.

In the context of the present invention, a system may be provided, wherein the providers 11, 12 comprise several provider asset classes and/or wherein the consumers 21, 22 comprise several consumer asset classes.

The providers 11, 12 and/or the consumers 21, 22 can be arranged and/or aggregated in clusters CL1, CL2. Therefore, the clusters CL1, CL2 can comprise providers 11, 12 (only), consumers 21, 22 (only) and/or (both) providers 11, 12 and consumers 21, 22. The providers 11, 12 and/or the consumers 21, 22 can be connected, in particular via (separate) data connections (dashed lines), e.g. the internet, to one technical aggregator and/or a plurality of technical aggregators TA1, TA2. The providers 11, 12 and/or the consumers 21, 22 can provide provider forecasts fc11, fc12 and/or consumer forecasts fc21, fc22 to (corresponding technical aggregators TA1, TA2 of) the plurality of technical aggregators TA1, TA2. Preferably, these can be specific for planned energy provision, consumption and/or flexibility. The plurality of technical aggregators TA1, TA2 can calculate 130 cluster forecasts fcCL1, fcCL2 (see above). The technical aggregators TA1, TA2 can be connected, in particular via (separate) data connections (dashed lines), e.g. the internet, to an electronic control unit ECU, in particular an aggregator A, which can receive the cluster forecasts fcCL1, fcCL2. The electronic control unit ECU can comprise a computing unit CU (e.g. a processor) and/or a memory unit MU. The electronic control unit ECU can implement and/or comprise the aggregator A and/or a virtual power plant VPP. The electronic control unit ECU, in particular the aggregator A, can provide a combined forecast fc_com, which preferably is specific for a combined energy provision, consumption and/or flexibility, in particular to the virtual power plant VPP. The electronic control unit ECU, in particular the virtual power plant VPP, can provide a bid bid_fc based on the combined forecast fc_com, in particular to an exchange EX, which preferably is configured for an (large-scale) exchange of energy and/or flexibility. The electronic control unit ECU, in particular the virtual power plant VPP, can receive a parameter set par from the exchange EX, preferably based on an accepted future exchange (for/during the future time interval t2). In the simplest case, the parameter set par can comprise information that the bid bid_fc has been realized and/or accepted. The electronic control unit ECU, in particular the virtual power plant VPP, can provide a schedule S (based on the parameter set par and/or the combined forecast fc_com), which preferably includes a realization and/or implementation plan and/or control signals for the technical aggregators TA1, TA2, the providers 11, 12 and/or consumers 21, 22. Based on the schedule S and/or the (corresponding) control signals, the providers 11, 12 and/or consumers 21, 22 can be configured to provide and/or consume electrical energy to/from the electrical grid 50, to which they are preferably (electrically connected). The electronic control unit ECU, in particular the aggregator A, and/or the exchange EX can also be connected to the electrical grid 50 for data communication, in particular to receive information from other providers, consumers and/or technical aggregators. If not indicated differently, the (above) entities can at least be connected for data communication, in particular via the internet. The electronic control unit ECU can be a central server. Alternatively, the electronic control unit ECU can also comprise a (distributed) cloud computing system, wherein in particular the aggregator A and the virtual power plant VPP are (locally) separated. The electronic control unit ECU, in particular the aggregator A, may be configured to calculate and/or provide cluster specific schedule S1, S2 to the clusters CL1, CL2. Preferably, based on the cluster specific schedule(s) S1, S2, consumer specific schedule(s) S21, S22 and/or provider specific schedule(s) S11, S12 can be provided, in particular for controlling consumers 21,22 and/or providers 11, 12 of a corresponding/this cluster CL1, CL2. These can be provided and/or calculated by the technical aggregator(s) TA1, TA2 and preferably (then) be transmitted to the specific consumers 21, 22 and/or providers 11, 12 (of the cluster[s]).

### List of reference signs

- 11, 12: providers
- 21, 22: consumers
- 50: electrical grid
- 100: energy system
- 102: connecting at least one technical aggregator to the electronic control unit
- 104: registering the at least one technical aggregator by the electronic control unit
- 105: creating clusters of providers and consumers
- 110: providing provider forecasts
- 120: providing consumer forecasts
- 130: calculating the cluster forecasts
- 138: transmitting the cluster forecasts
- 139: receiving the cluster forecasts
- 140: providing cluster forecasts
- 150: calculating a combined forecast
- 151: merging the cluster forecasts
- 155: providing the combined forecast on an exchange
- 157: receiving the schedule or calculating the schedule
- 160: providing a schedule
- 170: controlling the energy system based on the schedule
- 171: controlling the providers
- 172: controlling the consumers
- 173: controlling via an electrical grid
- 180: reordering
- A: aggregator
- bid_fc: bid
- CL1, CL2: clusters
- ECU: electronic control unit
- CU: computing unit
- MU: memory unit
- EX: exchange
- fc11, fc12: provider forecasts
- fc21, fc22: consumer forecasts
- fcCL1, fcCL2: cluster forecasts
- fc_com: combined forecast
- par: parameter set
- S: schedule
- S1, S2: cluster specific schedule
- S11, S12: provider specific schedule
- S21, S22: consumer specific schedule
- t2: future time interval
- TA1, TA2: technical aggregators
- VPP: virtual power plant

## Claims

1. Method for controlling an energy system (100), the energy system (100) comprising:
- an electronic control unit (ECU), which preferably implements an aggregator (A) and a virtual power plant (VPP),
wherein the method comprises:
- providing (140), by the electronic control unit (ECU), preferably the aggregator (A), cluster forecasts (fcCL1, fcCL2) comprising planned energy provision and planned energy consumption of clusters (CL1, CL2) of providers (11, 12) and consumers (21, 22), wherein the cluster forecasts (fcCL1, fcCL2) are specific for a future time interval (t2),
- calculating (150), by the electronic control unit (ECU), preferably the aggregator (A), a combined forecast (fc_com), based on the cluster forecasts (fcCL1, fcCL2),
- providing (160), by the electronic control unit (ECU), preferably the virtual power plant (VPP), a schedule (S) which is specific for the combined forecast (fc_com) and the future time interval (t2).
- controlling (170), by the electronic control unit (ECU), preferably the virtual power plant (VPP), the energy system (100) based on the schedule (S).

2. Method according to claim 1,
**characterized in that,**
the method comprises, in particular before calculating (130) the cluster forecasts (fcCL1, fcCL2):
- creating (105), in particular by the plurality of technical aggregators (TA1, TA2), clusters (CL1, CL2) of providers (11, 12) and consumers (21, 22) based on at least one of their
∘ local distribution,
∘ electrical connection, in particular location of grid connection point,
∘ grid limitations,
∘ electrical power,
∘ electrical flexibility, and/or
∘ electrical storage capability,
which preferably are specific for the providers (11, 12) and consumers (21, 22).

3. Method according to any one of the preceding claims,
**characterized in that,**
the method comprises, in particular before calculating (130) the cluster forecasts (fcCL1, fcCL2) and/or before creating (105) clusters (CL1, CL2) of providers (11, 12) and consumers (21, 22):
- connecting (102) at least one technical aggregator (TA1, TA2), in particular of the plurality of technical aggregators (TA1, TA2), to the electronic control unit (ECU), in particular the aggregator (A), and/or
- registering (104) the at least one technical aggregator (TA1, TA2), in particular of the plurality of technical aggregators (TA1, TA2), by the electronic control unit (ECU), in particular the aggregator (A).

4. Method according to any one of the preceding claims,
**characterized in that,**
the method comprises, in particular before providing (140) the cluster forecasts (fcCL1, fcCL2):
- calculating (130), in particular by a plurality of technical aggregators (TA1, TA2), the cluster forecasts (fcCL1, fcCL2) comprising planned energy provision and planned energy consumption of clusters (CL1, CL2) based on
∘ provider forecasts (fc11, fc12), which are specific for at least planned energy provision of the providers (11, 12), in particular for the future time interval (t2) and
∘ consumer forecasts (fc21, fc22), which are specific for at least planned energy consumption of the consumers (21, 22), in particular for the future time interval (t2),
the method preferably comprising, in particular before providing (140) and/or calculating (150):
- transmitting (138) the cluster forecasts (fcCL1, fcCL2) from the technical aggregators (TA1, TA2) to the electronic control unit (ECU), in particular to the aggregator (A),
- receiving (139), by the electronic control unit (ECU), in particular the aggregator (A), the cluster forecasts (fcCL1, fcCL2).

5. Method according to any one of the preceding claims,
**characterized in that,**
each of the cluster forecasts (fcCL1, fcCL2) comprises at least one of:
- a cluster provision profile comprising a planned provided electrical power over time, which is specific for the future time interval (t2),
- a cluster consumption profile comprising a planned consumed electrical power over time, which is specific for the future time interval (t2), and/or
- a cluster flexibility profile comprising a planned electrical flexibility over time, which is specific for the future time interval (t2).

6. Method according to claim 4,
**characterized in that,**
the method comprises, in particular before calculating (130) the cluster forecasts (fcCL1, fcCL2):
- providing (110), by the providers (11, 12), in particular to the plurality of technical aggregators (TA1, TA2), provider forecasts (fc11, fc12) which are at least specific for planned energy provision of the providers (11, 12), and
- providing (120), by consumers (21, 22), in particular to the plurality of technical aggregators (TA1, TA2), consumer forecasts (fc21, fc22) which are at least specific for planned energy consumption of the consumers (21, 22).

7. Method according to any one of the preceding claims,
**characterized in that,**
calculating (150) a combined forecast (fc_com) comprises merging (151) the cluster forecasts (fcCL1, fcCL2), wherein the combined forecast (fc_com) comprises at least one of:
- a combined provision profile comprising a planned provided electrical power over time, which is specific for the future time interval (t2),
- a combined consumption profile comprising a planned consumed electrical power over time, which is specific for the future time interval (t2), and/or
- a combined flexibility profile comprising a planned electrical flexibility over time, which is specific for the future time interval (t2).

8. Method according to any one of the preceding claims,
**characterized in that,**
calculating (150) a combined forecast (fc_com), and/or in particular creating (105) clusters (CL1, CL2), is based on predictive modelling and/or machine learning.

9. Method according to any one of the preceding claims,
**characterized in that,**
the method comprises, in particular before providing (160) the schedule (S):
- providing (155), by the electronic control unit (ECU), preferably the virtual power plant (VPP), the combined forecast (fc_com) and/or a bid (bid_fc) which is specific for the combined forecast (fc_com), on an exchange (EX) configured for at least an exchange of electrical energy and/or electrical flexibility, and
- receiving (157), by the electronic control unit (ECU), preferably the virtual power plant (VPP), a parameter set (par) received from the exchange(EX), wherein in particular the parameter set (par) is configured as a basis for providing (160) the schedule (S).

10. Method according to any one of the preceding claims,
**characterized in that,**
the method comprises, preferably after controlling (170):
- reordering (180), in particular by the electronic control unit (ECU) and/or the virtual power plant (VPP), the clusters (CL1, CL2) into reordered clusters which are different from the clusters (CL1, CL2).

11. Method according to any one of the preceding claims,
**characterized in that,**
controlling (170) comprises:
- controlling (171) the providers (11, 12) based on control signals provided by the electronic control unit (ECU), in particular via the technical aggregators (TA1, TA2) and/or a cluster specific schedule (S1, S2),
- controlling (172) the consumers (21, 22) based on control signals provided by the electronic control unit (ECU), in particular via the technical aggregators (TA1, TA2) and/or a cluster specific schedule (S1, S2), and/or
- controlling (173), in particular by the electronic control unit (ECU), the energy system (100) based on the schedule (S) by providing control signals to the providers (11, 12) and consumers (21, 22) via an electrical grid (50) of the energy system (100).

12. Computer program product comprising instructions which, when the computer program product is executed by a computer, cause the computer to implement the method according to any one of the preceding claims.

13. Computer-readable storage medium in which instructions are stored which, when executed by a computer, cause the computer to implement the method according to any one of the preceding method claims.

14. Electronic control unit (ECU), comprising a computing unit (CU) and/or a memory unit (MU), in which instructions are stored which, when at least partially executed by the computing unit (CU), implement a method according to any one of the preceding method claims.

15. Energy system (100) comprising an electronic control unit (ECU) according to the preceding claim.
